# EUROPEAN PATENT SPECIFICATION

(11) **EP 3 437 453 B1**
(45) Date of publication and mention of the grant of the patent: **17.03.2021**
(21) Application number: 18186134.5
(22) Date of filing: 27.07.2018
(51) Int. Cl.: A01D 34/71

(54) **RIDING GRASS-MOWER**
AUFSITZRASENMÄHER
TONDEUSE AUTO-PORTÉE

(30) Priority: 31.07.2017 JP 2017148067
(43) Date of publication of application: 06.02.2019
(73) Proprietor: Iseki & Co., Ltd., Matsuyama-shi, Ehime 799-2692 (JP)
(72) Inventor: BABA, Yusuke, Tobe-cho, Iyo-gun, Ehime 791-2193 (JP); TODA, Hirotaka, Tobe-cho, Iyo-gun, Ehime 791-2193 (JP)
(74) Representative: Spengler, Robert

(56) References cited:
- EP-A2- 3 329 759
- US-A- 4 008 559
- US-A- 5 442 902
- US-A1- 2008 134 654
- US-B1- 7 337 602

## Description

### BACKGROUND OF THE INVENTION

### Field of the Invention

The present invention relates to a riding grass-mower for which the blade revolves, for example.

Known is a riding grass-mower comprising a side discharge cover being rotatable so as to cover the mowed-grass discharging port, which guides mowed-grass discharged from the mowed-grass discharging port (for example, refer to Japanese Patent Application Publication No. 2016-158536).

A riding grass-mower like this is a riding grass-mower for which the blade revolves.

Document EP 3 329 759 A1 discloses a grass mower device which includes a cover urging mechanism for urging a discharge opening to a closing posture, a lock mechanism switchable between a locking state for holding the discharge opening cover under the closing posture and a lock releasing posture for allowing switchover of the discharge-opening cover to the opening posture, a lock urging mechanism for urging the lock mechanism to the locking state, and an operational portion for switching the lock mechanism to the lock releasing posture against the urging force of the lock urging mechanism.

Document US 4,008,559 discloses a safety deflector assembly for the discharge chute of a power lawn mower. The deflector assembly comprises a deflector or guard plate pivotally mounted on the mower deck adjacent to the discharge chute and normally biased toward a guard position, and a latching mechanism automatically operable upon movement of the deflector to its guard position located in the path of movement of material discharged from the discharge chute for latching the deflector in its guard position. The latching mechanism is manually operable to unlatch the deflector to permit manual movement of the deflector away from its guard position out of the path of movement of the discharged material to permit attachment of a grass catcher to the discharge chute.

Document US 5,442,902 discloses a rotary lawn mower specially adapted for selectively mulching and/or discharging grass clippings. One embodiment comprises a lawn mower having a generally conventional cutting deck, with an integrated discharge chute/mulching plug hingedly secured to the deck adjacent the discharge opening. The integrated discharge chute/mulching plug is selectively movable between a plurality of positions, including a mulch position and a discharge position In the mulch position, the inner wall of the plug member extends within the discharge chute to establish a generally continuous inner wall within the cutting chamber for improved mulching performance. The mower further includes a cutting blade, having a pair of raised rib sections intermediate the cutting edges and the central hub, the raised ribs being operative to create an additional upward air flow component to improve circulation during both mulching and discharging.

Document US 2008/0134654 A1 discloses a lawn mower attachment for controlling lateral discharge of clippings expelled from a discharge chute of a mover. The attachment includes a flap pivotably attached to the discharge chute, a control bracket secured to an exterior surface of the lawn mower, and a rod. A first end of the rod is secured to the flap, and a free second end of the rod extends outwardly from the control bracket. The rod extends through and is slideably disposed within a channel in the control bracket. Movement of the second end away from the control bracket pivots a distal edge of the flap away from the discharge chute, while movement of the second end toward the control bracket pivots the distal edge of the flap toward the discharge chute.

Document US 7,337,602 A1 discloses a mulch plate adjustment apparatus for use with lawn mowers. The adjustment apparatus is used to adjust the height of a mulch plate attached to the lawn mower and to secure the mulch plate at the desired height by the use of a handle and handle-locking ratchet mechanism. The adjustment apparatus is affixed to the discharge chute of a lawn mower. The apparatus includes a handle-operated mulch plate raising-and-lowering mechanism that allows the mulch plate to be adjusted to different heights to accommodate different sized lawn mowers and different mowing conditions. The operator of the mulch plate adjustment apparatus can select a desired height for the mulch plate and safely secure the mulch plate at the selected height by simple operation of a handle. Further, the mulch plate apparatus provides a mechanism for allowing the mulch plate to be raised in a storage position without the need to provide extension wires or cables.

### SUMMARY OF THE INVENTION

However, the present inventors have noticed that, in a conventional tractor, it cannot be said that there is no danger accompanying grass-mowing working at all.

An object of the present invention is, in consideration of the conventional problem described above, to furnish a riding grass-mower which can safely perform grass-mowing working.

The 1^{st} aspect of the present invention is a riding grass-mower, comprising: a mower deck (110); a mowed-grass guiding plate (200) rotatably provided at a mowed-grass discharging port (111), which guides mowed-grass discharged from the mowed-grass discharging port (111), and a lock member (310) which locks the mowed-grass guiding plate (200) in a posture that is guiding mowed-grass discharged from the mowed-grass discharging port (111),
**characterized in that**
the riding grass-mower comprises:
a lock spring which energizes the lock member (310) so that the lock state is realized;
an unlock pin attached to the lock member (310);
an unlock holding member (340) provided on the mowed-grass guiding plate (200), which holds the lock member (310) so that an unlock state of the lock member (310) is realized; and
an unlock releasing member (350) provided on the mower deck (110) which releases the unlock state and realizes a lock state, when the mowed-grass guiding plate (200) in a posture that is not guiding mowed-grass discharged from the mowed-grass discharging port (111), is rotated so that a posture that is guiding mowed-grass discharged from the mowed-grass discharging port (111) is realized, wherein
the unlock holding member (340) is an unlock pin catching member which catches, in opposition to energization by the lock spring, the unlock pin so that the unlock state is realized, and
when the mowed-grass guiding plate (200) which is not covering the mowed-grass discharging port (111) is rotated so as to cover the mowed-grass discharging port (111), the unlock releasing member (350) abuts against the unlock pin which the unlock holding member (340) is catching, so that the unlock state is released.

By means of this, since the lock member (310) locks the mowed-grass guiding plate (200) which is covering the mowed-grass discharging port (111), grass-mowing working can be safely performed.

By means of this, since the unlock holding member (340) holds the lock member (310) so that an unlock state is realized, maintenance working can be easily performed.

By means of this, since when the mowed-grass guiding plate (200) is rotated so as to cover the mowed-grass discharging port (111), the unlock releasing member (350) releases the unlock state and realizes a lock state, grass-mowing working can be more safely performed.

The 2^{nd} aspect of the present invention is the riding grass-mower according to the 1^{st} aspect of the present invention, wherein
the lock member (310) is a lock pin, which is provided at a side of the mowed-grass guiding plate (200) and is made to protrude to a side of the mower deck (110), and
a lock pin receiving plate (610), where a lock pin receiving hole (611) into which a tail-part of the lock member (310) is inserted is formed, is standingly provided onto a mower deck top-plate member (112) of the mower deck (110).

By means of this, grass-mowing working can be safely performed with a simple configuration.

The 3^{rd} aspect of the present invention is the riding grass-mower according to the 1^{st} or 2^{nd} aspect of the present invention, wherein
the unlock pin is inserted into a penetrating hole formed in the lock member (310) so as to protrude from the lock member (310),
the unlock releasing member (350) is a plate, and
a top face of the unlock releasing member (350) is, in top view, arranged so as to be parallel with a pin-axis direction of the lock member (310).

The 4^{th} aspect of the present invention is the riding grass-mower according to the 3^{rd} aspect of the present invention, wherein
when the mowed-grass guiding plate (200) is covering the mowed-grass discharging port (111), the top face of the unlock releasing member (350) protrudes so that the unlock holding member (340) cannot catch the unlock pin without a rotation of the lock member (310).

By the present invention, a riding grass-mower which is able to safely perform grass-mowing working can be furnished.

### BRIEF DESCRIPTION OF THE DRAWINGS

FIG. 1 is a left side view of the riding grass-mower of the embodiment in the present invention;
FIG. 2 is a top view of the riding grass-mower of the embodiment in the present invention;
FIG. 3 is a partial perspective view of the neighborhood of the side discharge mower of the riding grass-mower of the embodiment in the present invention;
FIG. 4 is a partial perspective view (No. 1) of the neighborhood of the side discharge cover of the riding grass-mower of the embodiment in the present invention;
FIG. 5 is a partial perspective view (No. 2) of the neighborhood of the side discharge cover of the riding grass-mower of the embodiment in the present invention;
FIG. 6 is a schematic partial perspective view of the neighborhood of the snap pin of the riding grass-mower of the embodiment in the present invention;
FIG. 7 is a partial perspective view (No. 3) of the neighborhood of the side discharge cover of the riding grass-mower of the embodiment in the present invention;
FIG. 8 is a partial rear view of the neighborhood of the side discharge cover of the riding grass-mower of the embodiment in the present invention;
FIG. 9 is a partial perspective view (No. 4) of the neighborhood of the side discharge cover of the riding grass-mower of the embodiment in the present invention;
FIG. 10 is a partial perspective view (No. 1) of the neighborhood of the side discharge cover of the riding grass-mower of another embodiment in the present invention; and
FIG. 11 is a partial perspective view (No. 2) of the neighborhood of the side discharge cover of the riding grass-mower of another embodiment in the present invention.

### Description of the Reference Numerals

- 10: vehicle-body
- 20: front-wheel
- 30: rear-wheel
- 40: operation part
- 41: steering wheel
- 100: side discharge mower
- 110: mower deck
- 111: mowed-grass discharging port
- 112: mower deck top-plate member
- 113: mowing blade attaching hole
- 200: side discharge cover
- 210: cover top face plate
- 310: lock pin
- 320: compression coil spring
- 330: spring pin
- 340: spring pin catching member
- 350: unlock releasing plate
- 400: side discharge cover attaching member
- 410: cover-side fulcrum plate
- 420: deck-side fulcrum plate
- 430: fulcrum pin
- 431: snap pin penetrating hole
- 432: snap pin
- 500: lock pin attaching member
- 510: lock pin attaching plate
- 600: lock pin receiving member
- 610: lock pin receiving plate
- 611: lock pin receiving hole
- 620: lock pin receiving plate attaching member
- 621: bolt penetrating hole
- 622: bolt

### DESCRIPTION OF THE EMBODIMENTS

In the following, referring to the drawings, descriptions are given in detail regarding embodiments in the present invention.

A side discharge cover 200 rotatably provided at a mowed-grass discharging port 111, which guides mowed-grass discharged from the mowed-grass discharging port 111 is one example of the mowed-grass guiding plate of the present invention.

A lock pin 310 which locks the side discharge cover 200 in a posture that is guiding mowed-grass discharged from the mowed-grass discharging port 111 is one example of the lock member of the present invention, and is a lock pin.

A spring pin catching member 340 which holds the lock pin 310 so that an unlock state is realized is one example of the unlock holding member of the present invention, and is an unlock pin catching member which catches, in opposition to energization by a compression coil spring 320, a spring pin 330 so that the unlock state is realized.

An unlock releasing plate 350 which releases the unlock state and realizes a lock state, when the side discharge cover 200 in a posture that is not guiding mowed-grass discharged from the mowed-grass discharging port 111, is rotated so that a posture that is guiding mowed-grass discharged from the mowed-grass discharging port 111 is realized is one example of the unlock releasing member of the present invention and, when the side discharge cover 200 which is not covering the mowed-grass discharging port 111 is rotated so as to cover the mowed-grass discharging port 111, abuts against the spring pin 330 which the spring pin catching member 340 is catching, so that the unlock state is released.

The compression coil spring 320 which energizes the lock pin 310 so that the lock state is realized is one example of the lock spring of the present invention.

The spring pin 330 attached to the lock pin 310 is one example of the unlock pin of the present invention.

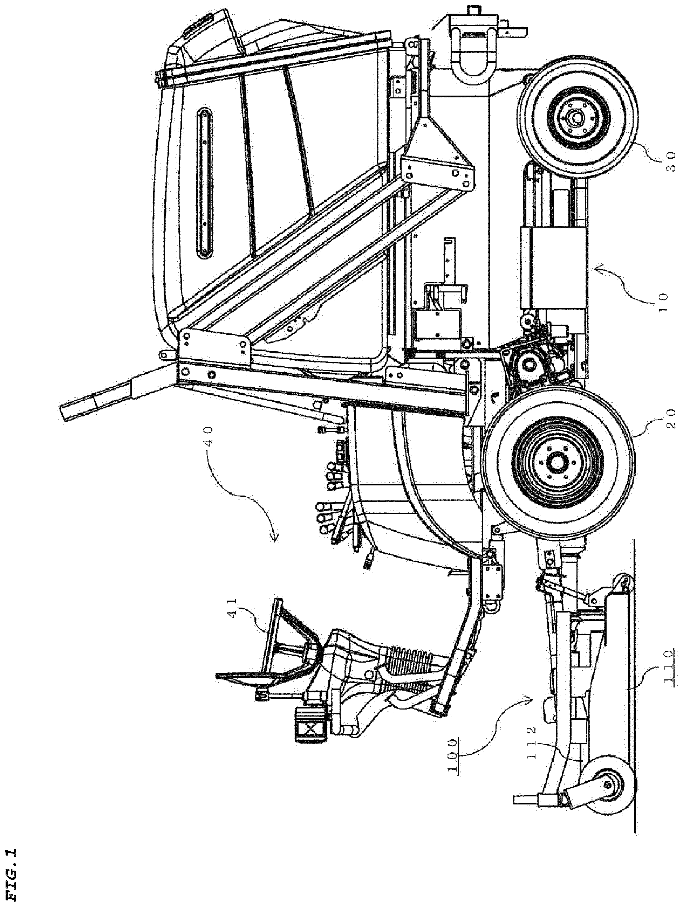

(A) In the beginning, referring to FIGs. 1 to 3, descriptions are specifically given regarding the configuration and action of a riding grass-mower of the present embodiment.

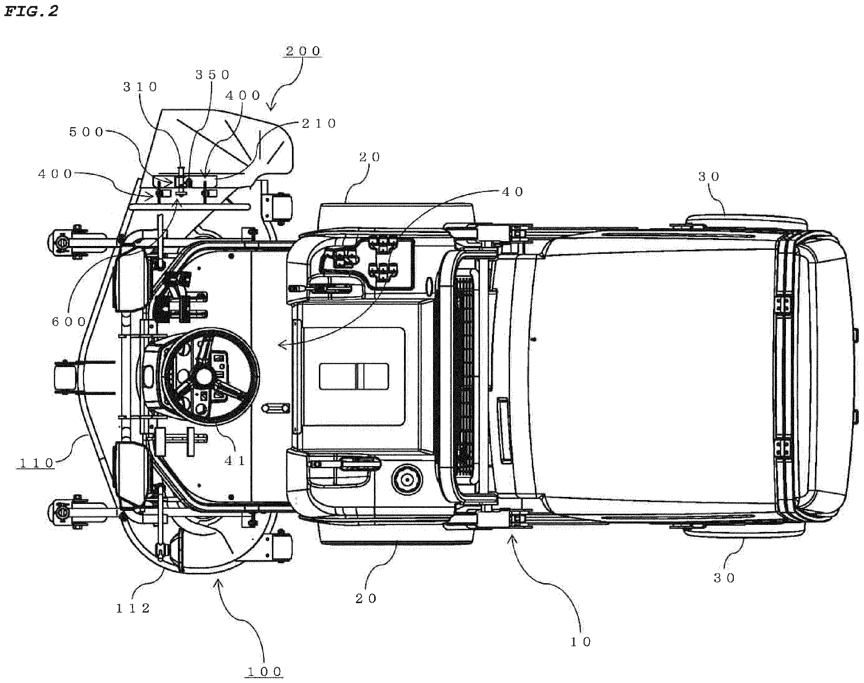

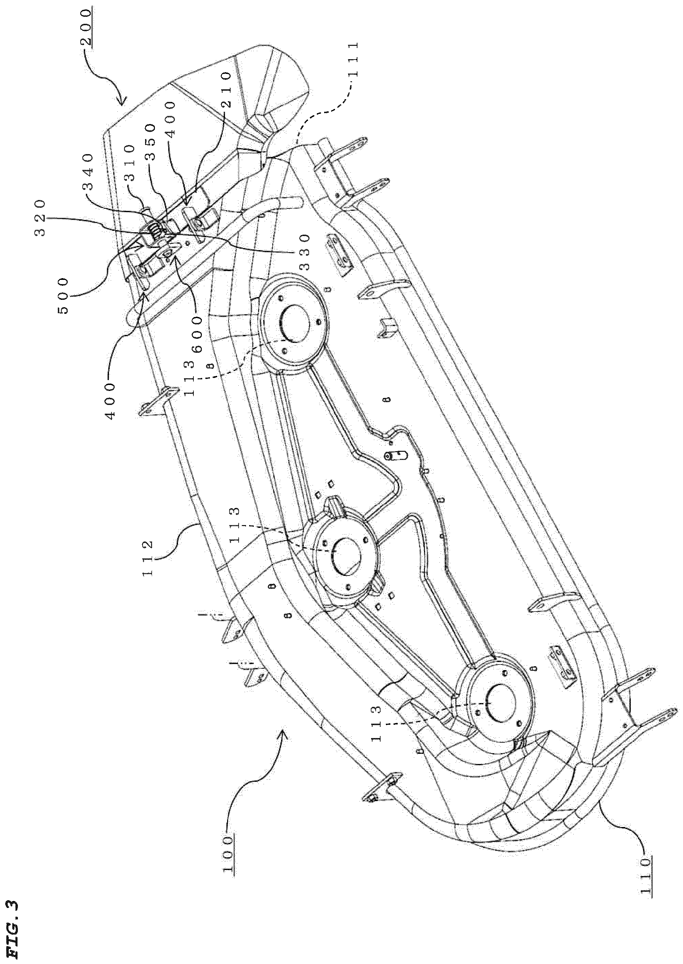

Here, FIG. 1 is a left side view of the riding grass-mower of the embodiment in the present invention, FIG. 2 is a top view of the riding grass-mower of the embodiment in the present invention, and FIG. 3 is a partial perspective view of the neighborhood of a side discharge mower 100 of the riding grass-mower of the embodiment in the present invention.

In FIG. 3, the lock state where the side discharge cover 200 which is covering the mowed-grass discharging port 111 is being locked by the lock pin 310 is shown.

In short, the side discharge cover 200 in a posture that is not guiding mowed-grass discharged from the mowed-grass discharging port 111 is the side discharge cover 200 which is not covering the mowed-grass discharging port 111, and the side discharge cover 200 in a posture that is guiding mowed-grass discharged from the mowed-grass discharging port 111 is the side discharge cover 200 which is covering the mowed-grass discharging port 111.

Several configuration elements are sometimes not shown in the drawings and are sometimes shown with omission; the same shall apply hereinafter. For example, in FIGs. 1 and 2, the seat on which a worker sits when performing operation is not shown.

What is described in the first place is the fundamental configuration and action of the riding grass-mower of the present embodiment. Hence, regarding the configuration and action and the like which are related to the side discharge cover 200, descriptions are later given in detail.

In the front part of a vehicle-body 10 which is supported by left and right front-wheels 20 and left and right rear-wheels 30, an operation part 40 for a worker's performing driving is provided.

In the operation part 40, a steering wheel 41 for a worker's performing operation is provided. Of course, in the operation part 40, the seat (illustration omitted) on which a worker sits when performing operation and the like are also provided.

The side discharge mower 100 possesses a mower deck 110 for which the top face is overlaid with a mower deck top-plate member 112 and the bottom face is opened.

The mowing blade (illustration omitted) is a blade which mows grass while revolving around the axis being vertical. Three mowing blades are provided side by side in the vehicle-body left-and-right direction. The left mowing blade is provided correspondingly to a left mowing blade attaching hole 113, the central mowing blade is provided correspondingly to a central mowing blade attaching hole 113, and the right mowing blade is provided correspondingly to a right mowing blade attaching hole 113.

The grass may be a weed, may be a lawn grass, or may be a meadow grass.

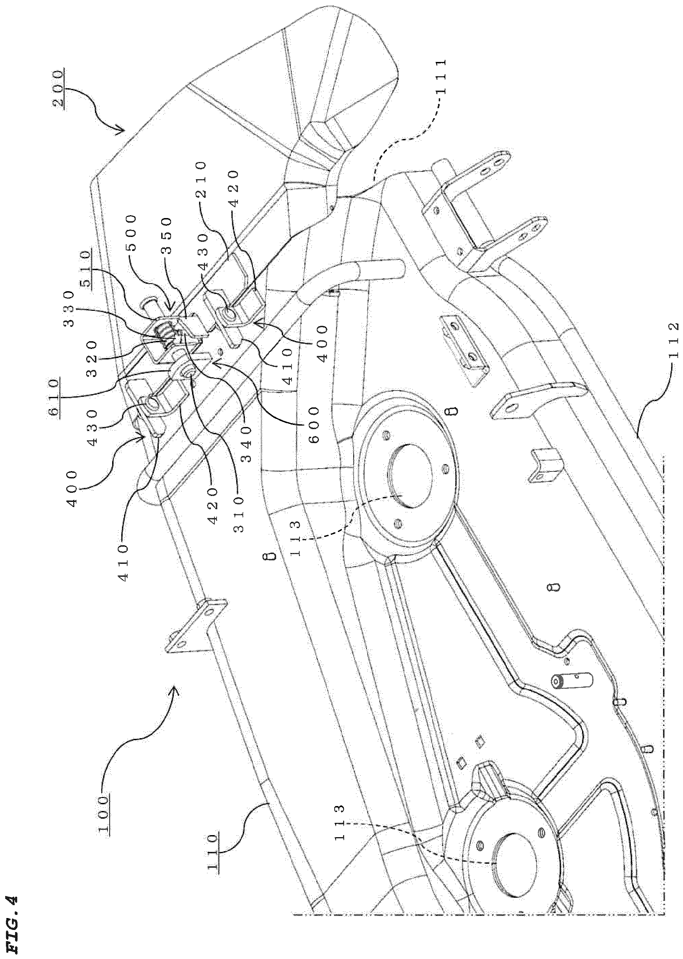

(B) Next, mainly referring to FIGs. 4 to 6, descriptions are given in detail regarding the configuration and action and the like which are related to the side discharge cover 200.

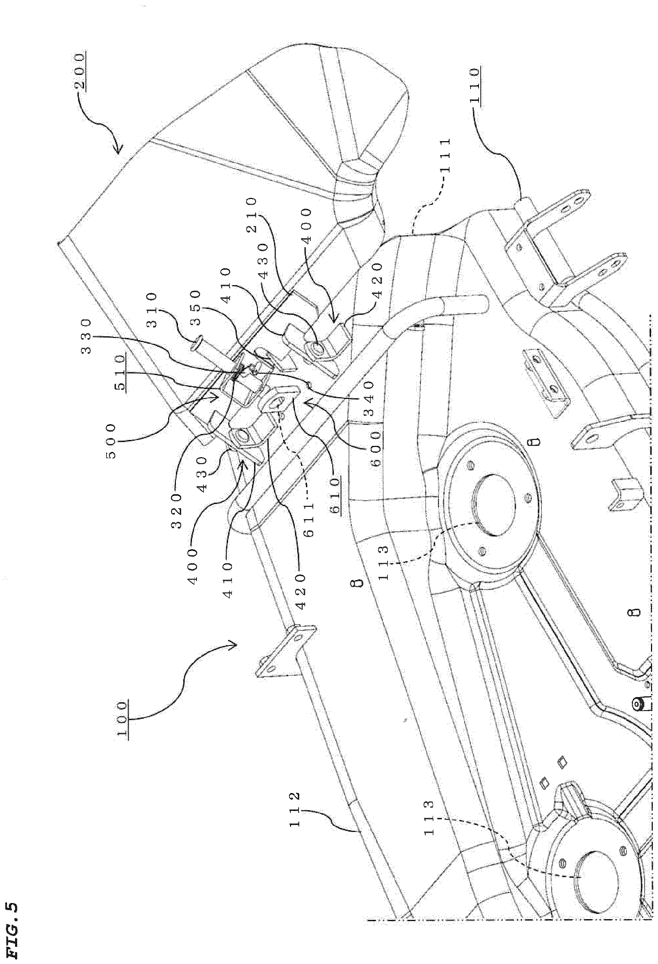

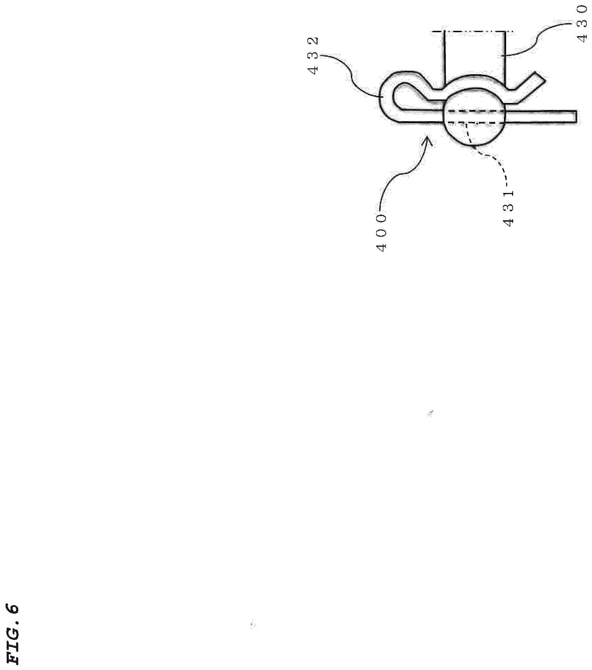

Here, FIGs. 4 and 5 are partial perspective views (Nos. 1 and 2) of the neighborhood of the side discharge cover 200 of the riding grass-mower of the embodiment in the present invention, and FIG. 6 is a schematic partial perspective view of the neighborhood of a snap pin 432 of the riding grass-mower of the embodiment in the present invention.

In FIG. 4, the lock state where the side discharge cover 200 which is covering the mowed-grass discharging port 111 is being locked by the lock pin 310 is shown. In FIG. 5, the unlock state where the side discharge cover 200 is not being locked by the lock pin 310 is shown.

The side discharge cover 200 is a member being rotatable so as to cover the mowed-grass discharging port 111, which guides mowed-grass discharged from the mowed-grass discharging port 111.

The side discharge cover 200 is provided at the right side of the vehicle-body 10, and prevents mowed-grass discharged from the mowed-grass discharging port 111 to the right below the vehicle-body 10 from being blown up.

Additionally, an embodiment of a variant example is also conceived, where the side discharge cover 200 is provided at the left side of the vehicle-body 10, or is provided at both the left-and-right sides.

Two side discharge cover attaching members 400 provided side by side in the vehicle-body front-and-rear direction are members for rotatably attaching the side discharge cover 200 to the side discharge mower 100.

More specifically, descriptions are given as follows.

The side discharge cover attaching member 400 possesses a cover-side fulcrum plate 410, a deck-side fulcrum plate 420 and a fulcrum pin 430.

The cover-side fulcrum plate 410 is a plate being nearly flat, and is standingly provided onto the top face of the side discharge cover 200 via a cover top face plate 210. In the cover-side fulcrum plate 410, a penetrating hole of the fulcrum pin 430 is formed.

The deck-side fulcrum plate 420 is a bent plate nearly in an L-shape, and is standingly provided onto the mower deck top-plate member 112. In the deck-side fulcrum plate 420, a penetrating hole of the fulcrum pin 430 is formed.

The fulcrum pin 430 is a pin with a head-part, and is inserted into the penetrating hole formed in the cover-side fulcrum plate 410, and the penetrating hole formed in the deck-side fulcrum plate 420. In the tail-part of the fulcrum pin 430, a snap pin penetrating hole 431 into which the snap pin 432 is inserted for retaining of the fulcrum pin 430 is formed.

Since the side discharge cover 200 is rotatable, maintenance working for which the mowed-grass discharging port 111 is cleaned is easily performed.

The lock pin 310 is a member which locks the side discharge cover 200 which is covering the mowed-grass discharging port 111. The state of the lock pin 310 is switchable between the lock state where the side discharge cover 200 which is covering the mowed-grass discharging port 111 is being locked by the lock pin 310, and the unlock state where the side discharge cover 200 is not being locked by the lock pin 310.

The compression coil spring 320 is a member which realizes a lock state.

The spring pin 330 is a member attached to the lock pin 310, which realizes an unlock state. The spring pin catching member 340 is a member which catches, in opposition to energization by the compression coil spring 320, the spring pin 330 so that the unlock state is realized.

A lock pin attaching member 500 is a member for slidably attaching the lock pin 310 to the side discharge cover 200.

More specifically, descriptions are given as follows.

The lock pin attaching member 500 possesses a lock pin attaching plate 510.

The lock pin attaching plate 510 is a bent plate nearly in a U-shape, and is standingly provided onto the top face of the side discharge cover 200 via the cover top face plate 210. In the lock pin attaching plate 510, two penetrating holes of the lock pin 310 are formed side by side in the vehicle-body left-and-right direction.

The lock pin 310 is a pin with a head-part, and is inserted into the two penetrating holes formed in the lock pin attaching plate 510 so as to pass through the compression coil spring 320. In the abdomen-part of the lock pin 310, a penetrating hole of the spring pin 330 is formed.

The spring pin 330 is inserted into the penetrating hole formed in the lock pin 310, so that the right end of the compression coil spring 320 abuts against the lock pin attaching plate 510, and that the left end of the compression coil spring 320 abuts against the spring pin 330.

The spring pin catching member 340 is standingly provided onto the top face of the side discharge cover 200 via the cover top face plate 210.

Since the lock pin 310 locks the side discharge cover 200 which is covering the mowed-grass discharging port 111, grass-mowing working for which the blade revolves is safely performed.

The lock state of the side discharge cover 200 is surely realized by the compression coil spring 320, and grass-mowing working is more safely performed.

The unlock state of the side discharge cover 200 is surely realized by the spring pin 330 and the spring pin catching member 340, and maintenance working is more easily performed.

The unlock releasing plate 350 is a member which, when the side discharge cover 200 which is not covering the mowed-grass discharging port 111 is rotated so as to cover the mowed-grass discharging port 111, abuts against the spring pin 330 which the spring pin catching member 340 is catching, so that the unlock state is released.

The unlock releasing plate 350 is a plate being nearly flat, and is standingly provided onto the mower deck top-plate member 112 so as not to interfere with the top face of the side discharge cover 200. The top face of the unlock releasing plate 350 is an inclining face for which, in the vehicle-body left-and-right direction, the right side is higher than the left side. The top face of the unlock releasing plate 350 is, in top view, arranged so as to be parallel with the pin-axis direction of the lock pin 310.

The unlock state is easily released by the unlock releasing plate 350, and grass-mowing working is still more safely performed.

A lock pin receiving member 600 is a member for receiving the lock pin 310 which is locking the side discharge cover 200.

More specifically, descriptions are given as follows.

The lock pin receiving member 600 possesses a lock pin receiving plate 610.

The lock pin receiving plate 610 is a plate being nearly flat, and is standingly provided onto the mower deck top-plate member 112. In the lock pin receiving plate 610, a lock pin receiving hole 611 into which the tail-part of the lock pin 310 is inserted when locking the side discharge cover 200 is formed.

(C) Next, descriptions are given in more detail regarding the configuration and action and the like which are related to the side discharge cover 200.

(C1) The side discharge cover attaching member 400 into which the snap pin 432 is inserted for retaining of the fulcrum pin 430 is utilized instead of a hinge and the like for attaching the side discharge cover 200 to the side discharge mower 100.

Since attachment and detachment of the side discharge cover 200 are performed without tools, the riding grass-mower is easily compactified at the time of carrying truck loading.

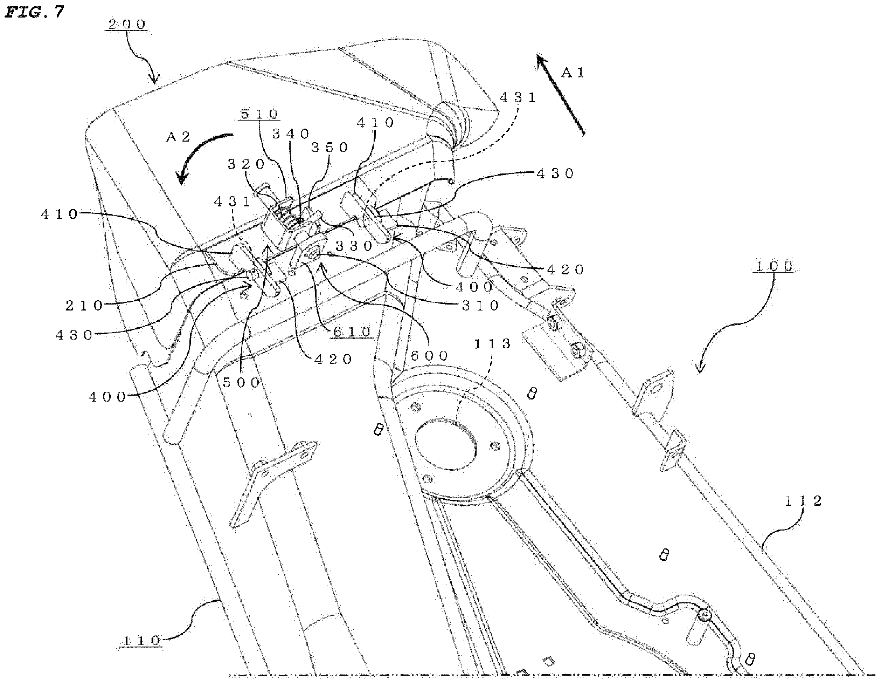

(C2) As is shown in FIG. 7, by the configuration for which the lock pin 310 provided at the side of the side discharge cover 200 is made to protrude to the side of mower deck 110 which is the main-body of the side discharge mower 100, a transition to the state where the side discharge cover 200 is not covering the mowed-grass discharging port 111 is prevented.

Here, FIG. 7 is a partial perspective view (No. 3) of the neighborhood of the side discharge cover 200 of the riding grass-mower of the embodiment in the present invention.

In FIG. 7, the lock state where the side discharge cover 200 which is covering the mowed-grass discharging port 111 is being locked by the lock pin 310 is shown.

Since the compression coil spring 320 abuts against the spring pin 330 attached to the lock pin 310, so that the lock state is realized, the side discharge cover 200 which is covering the mowed-grass discharging port 111 is, when grass-mowing working is being performed, being locked by the lock pin 310. Hence, there is almost no fear that the side discharge cover 200 is unintentionally pushed up by shocks and the like, and grass-mowing working for which the blade revolves is safely performed.

When the side discharge cover 200 is covering the mowed-grass discharging port 111, since the top face of the unlock releasing plate 350 protrudes and becomes an obstacle, the spring pin catching member 340 cannot catch the spring pin 330. If a worker who holds the head-part of the lock pin 310 intentionally makes the lock pin 310 rotate in the orientation of the arrow A2, in opposition to energization by the compression coil spring 320, pulls up the lock pin 310 to the right in the orientation of the arrow A1 so that the spring pin 330 gets over the spring pin catching member 340, and makes the spring pin catching member 340 catch the spring pin 330, then the unlock state is realized. The orientation of the arrow A2 is the clockwise orientation regarding the pin-axis direction of the lock pin 310, viewed from the right outside of the vehicle-body 10.

Since the top face of the unlock releasing plate 350 is, as described above, an inclining face for which, in the vehicle-body left-and-right direction, the right side is higher than the left side, provided that a worker neither pushes up slightly the side discharge cover 200, nor makes the lock pin 310 rotate in the orientation of the arrow A2, then the spring pin 330 unavoidably abuts against the unlock releasing plate 350, the lock pin 310 is not pulled up, and the spring pin catching member 340 is not made to catch the spring pin 330. Hence, when the side discharge cover 200 is covering the mowed-grass discharging port 111, there is almost no fear that the unlock state is unintentionally realized by shocks and the like.

Since the rear end of the spring pin 330 attached to the lock pin 310 sufficiently protrudes from the lock pin 310, the spring pin catching member 340 surely catches the spring pin 330. Hence, a worker who has made the spring pin catching member 340 catch the spring pin 330 can, while holding with one hand the side discharge cover 200 which has become freely rotatable, perform with the other hand cleaning and the like of the mowed-grass discharging port 111.

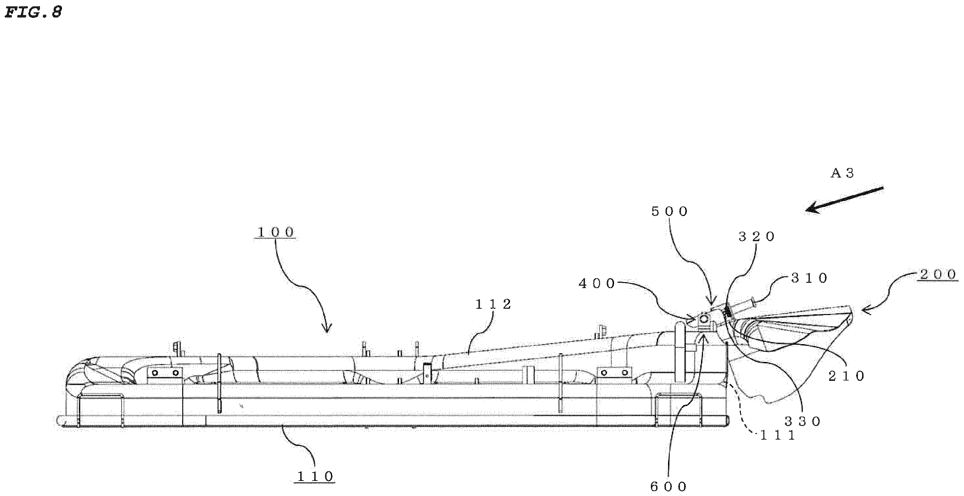

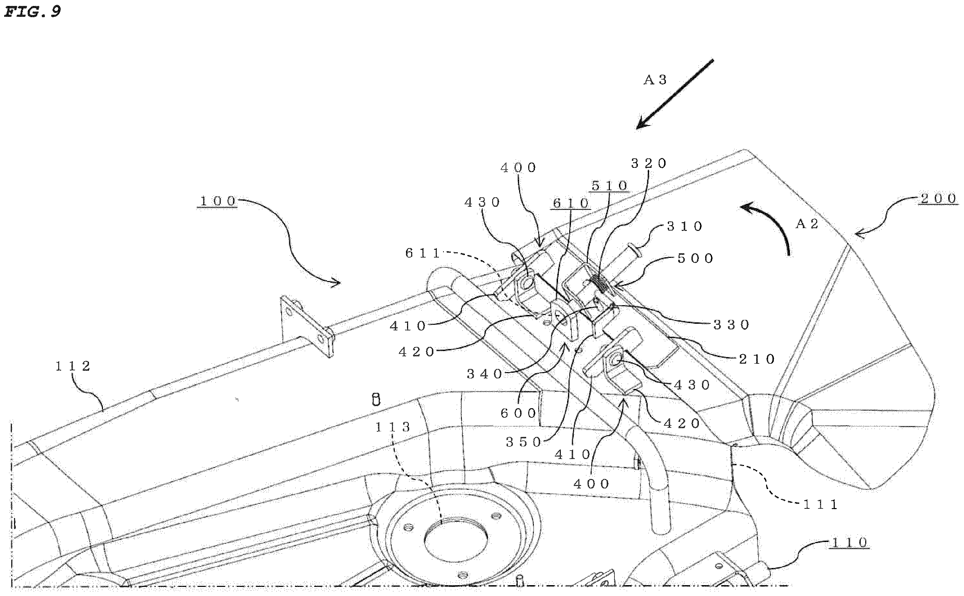

(C3) As is shown in FIGs. 8 and 9, the unlock releasing plate 350, if the side discharge cover 200 which has been pushed up is pushed down, abuts against the spring pin 330 which the spring pin catching member 340 is catching, so that the unlock state is released.

Here, FIG. 8 is a partial rear view of the neighborhood of the side discharge cover 200 of the riding grass-mower of the embodiment in the present invention, and FIG. 9 is a partial perspective view (No. 4) of the neighborhood of the side discharge cover 200 of the riding grass-mower of the embodiment in the present invention.

In FIGs. 8 and 9, the unlock state where the side discharge cover 200 is not being locked by the lock pin 310 is shown.

When the side discharge cover 200 which is not covering the mowed-grass discharging port 111 is rotated so as to cover the mowed-grass discharging port 111, if the unlock releasing plate 350 abuts against the spring pin 330 from below, then the lock pin 310 is made to rotate in the orientation of the arrow A2 and the spring pin 330 gets over the spring pin catching member 340, so that the spring pin catching member 340 does not catch the spring pin 330. Hence, since the compression coil spring 320 abuts against the spring pin 330 attached to the lock pin 310, so that the lock state is realized, if the side discharge cover 200 is pushed down, then the lock state is spontaneously realized.

Since the top face of the unlock releasing plate 350 is, as described above, an inclining face for which, in the vehicle-body left-and-right direction, the right side is higher than the left side, after the spring pin 330 has gotten over the spring pin catching member 340, the unlock releasing plate 350 does not interfere with the spring pin 330 of the lock pin 310 which is pushed down to the left in the orientation of the arrow A3. Hence, the lock pin 310 is smoothly pushed down, and there is almost no fear that a spontaneous realization of the lock state is interrupted by the unlock releasing plate 350.

(C4) By the simple configuration with the number of components being small, for which the tail-part of the lock pin 310 is inserted into the lock pin receiving hole 611 formed in the lock pin receiving plate 610, the lock pin 310 for locking the side discharge cover 200 is surely received.

The lock pin receiving hole 611 is a loosely-fitting-hole for which there is play of the lock pin 310. Hence, even in case the position of the lock pin 310 is shifted slightly, the lock pin 310 is surely inserted into the lock pin receiving hole 611.

If there is play of the lock pin 310 in the vertical direction in the lock pin receiving hole 611, even in case the position of the lock pin 310 is shifted slightly in the vertical direction, then the lock pin 310 is surely inserted into the lock pin receiving hole 611. And, as described above, a worker who wants to realize the unlock state by making the spring pin catching member 340 catch the spring pin 330 can easily push up slightly the side discharge cover 200.

If there is play of the lock pin 310 in the vehicle-body left-and-right direction in the lock pin receiving hole 611, even in case the position of the lock pin 310 is shifted slightly in the vehicle-body left-and-right direction, then the lock pin 310 is surely inserted into the lock pin receiving hole 611.

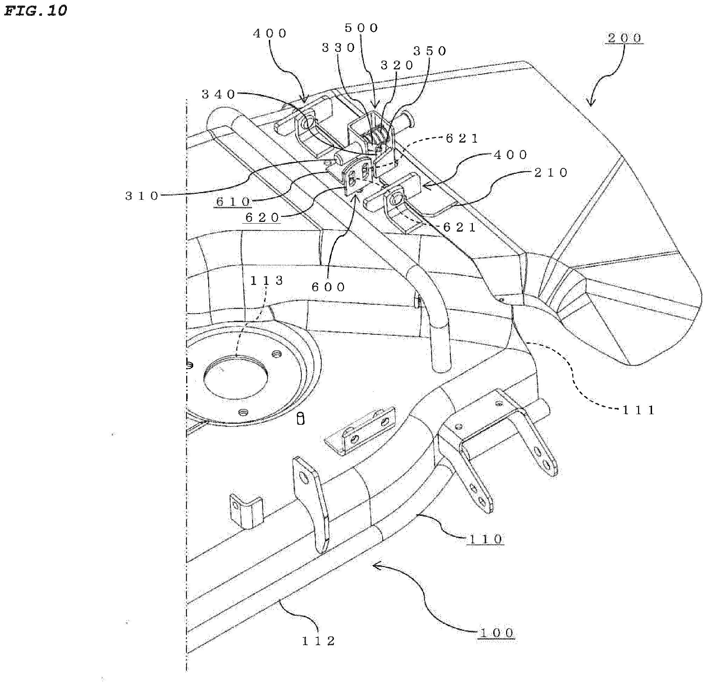

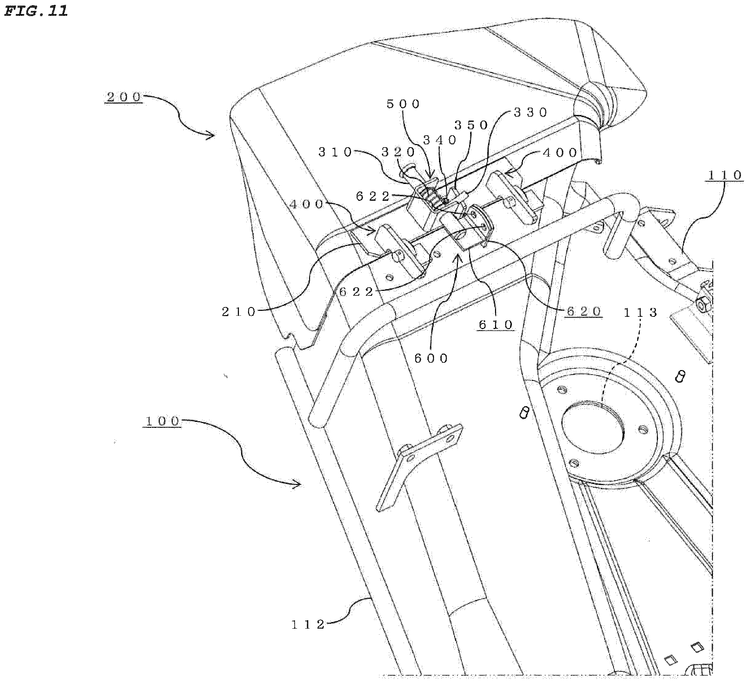

Additionally, as is shown in FIGs. 10 and 11, an embodiment of a variant example is also conceived, where the lock pin receiving member 600 further possesses a lock pin receiving plate attaching member 620.

Here, FIGs. 10 and 11 are partial perspective views (Nos. 1 and 2) of the neighborhood of the side discharge cover 200 of the riding grass-mower of another embodiment in the present invention.

In FIGs. 10 and 11, the lock state where the side discharge cover 200 which is covering the mowed-grass discharging port 111 is being locked by the lock pin 310 is shown.

In an embodiment of a variant example like this, the lock pin receiving plate 610 is attached to the lock pin receiving plate attaching member 620 with two bolts 622.

More specifically, descriptions are given as follows.

The lock pin receiving plate 610 is a bent plate nearly in an L-shape, and is height-adjustably attached to the lock pin receiving plate attaching member 620. In the lock pin receiving plate 610, penetrating holes of the two bolts 622 are formed side by side in the vehicle-body left-and-right direction.

The lock pin receiving plate attaching member 620 is a plate being nearly flat, and is standingly provided onto the mower deck top-plate member 112. In the lock pin receiving plate attaching member 620, two bolt penetrating holes 621 into which the bolts 622 are inserted when attaching the lock pin receiving plate 610 are formed side by side in the vehicle-body left-and-right direction.

The bolt 622 is a bolt with a head-part, and is inserted into the penetrating hole formed in the lock pin receiving plate 610, and the bolt penetrating hole 621 formed in the lock pin receiving plate attaching member 620. For example, in the tail-part of the bolt 622, a nut (illustration omitted) is installed for retaining of the bolt 622.

The bolt penetrating hole 621 is a loosely-fitting-hole for which there is play of the bolt 622 in the vertical direction. Hence, the configuration for which the lock pin receiving plate 610 is height-adjustably attached to the lock pin receiving plate attaching member 620 is realized. If the height of the lock pin receiving plate 610 is adjusted somewhat large, since the lock pin receiving plate 610 functions as a stopper against which the tail-part of the lock pin 310 abuts, then the opening-angle of the side discharge cover 200 regarding the discharging-range of mowed-grass discharged from the mowed-grass discharging port 111 becomes large.

(C5) By the configuration for which a cover tensioning spring is joined below the side discharge cover 200, the side discharge cover 200 is pulled down.

Since the side discharge cover 200 is tensioned so as to be pulled down, there is almost no fear that the side discharge cover 200 which is covering the mowed-grass discharging port 111 is, when grass-mowing working is being performed, unintentionally pushed up by shocks and the like, and grass-mowing working for which the blade revolves is safely performed.

Even in case the side discharge cover 200 is temporarily pushed up, since the mower deck top-plate member 112 functions as a stopper against which the left end of the cover-side fulcrum plate 410 abuts, so-called dead-point-excess of the cover tensioning spring is not generated, and the side discharge cover 200 is less prone to be kept pushed up.

A riding grass-mower in the present invention can safely perform grass-mowing working and, for example, is useful for the purpose of utilizing for a riding grass-mower for which the blade revolves.

## Claims

1. A riding grass-mower, comprising: a mower deck (110); a mowed-grass guiding plate (200) rotatably provided at a mowed-grass discharging port (111), which guides mowed-grass discharged from the mowed-grass discharging port (111); and a lock member (310) which locks the mowed-grass guiding plate (200) in a posture that is guiding mowed-grass discharged from the mowed-grass discharging port (111),
**characterized in that**
the riding grass-mower comprises:
a lock spring which energizes the lock member (310) so that the lock state is realized;
an unlock pin attached to the lock member (310);
an unlock holding member (340) provided on the mowed-grass guiding plate (200), which holds the lock member (310) so that an unlock state of the lock member (310) is realized; and
an unlock releasing member (350) provided on the mower deck (110), which releases the unlock state and realizes a lock state, when the mowed-grass guiding plate (200) in a posture that is not guiding mowed-grass discharged from the mowed-grass discharging port (111), is rotated so that a posture that is guiding mowed-grass discharged from the mowed-grass discharging port (111) is realized, wherein
the unlock holding member (340) is an unlock pin catching member which catches, in opposition to energization by the lock spring, the unlock pin so that the unlock state is realized, and
when the mowed-grass guiding plate (200) which is not covering the mowed-grass discharging port (111) is rotated so as to cover the mowed-grass discharging port (111), the unlock releasing member (350) abuts against the unlock pin which the unlock holding member (340) is catching, so that the unlock state is released.

2. The riding grass-mower according to claim 1, wherein
the lock member (310) is a lock pin, which is provided at a side of the mowed-grass guiding plate (200) and is made to protrude to a side of the mower deck (110), and
a lock pin receiving plate (610), where a lock pin receiving hole (611) into which a tail-part of the lock member (310) is inserted is formed, is standingly provided onto a mower deck top-plate member (112) of the mower deck (110).

3. The riding grass-mower according to claim 1 or 2, wherein
the unlock pin is inserted into a penetrating hole formed in the lock member (310) so as to protrude from the lock member (310),
the unlock releasing member (350) is a plate, and
a top face of the unlock releasing member (350) is, in top view, arranged so as to be parallel with a pin-axis direction of the lock member (310).

4. The riding grass-mower according to claim 3, wherein
when the mowed-grass guiding plate (200) is covering the mowed-grass discharging port (111), the top face of the unlock releasing member (350) protrudes so that the unlock holding member (340) cannot catch the unlock pin without a rotation of the lock member (310).

## Patentansprüche

1. Aufsitzrasenmäher, umfassend: ein Mäherdeck (110); eine Führungsplatte für gemähtes Gras (200), die drehbar an einem Entladeanschluss für gemähtes Gras (111) bereitgestellt ist, der gemähtes Gras führt, das vom Entladeanschluss für gemähtes Gras (111) entladen wird; und ein Verriegelungselement (310), das die Führungsplatte für gemähtes Gras (200) in einer Position verriegelt, die gemähtes Gras führt, das vom Entladeanschluss für gemähtes Gras (111), entladen wird;
**dadurch gekennzeichnet, dass**
der Aufsitzrasenmäher Folgendes umfasst:
eine Verriegelungsfeder, die das Verriegelungselement (310) aktiviert, so dass der Verriegelungszustand durchgeführt wird;
einen Entriegelungsstift, der an das Verriegelungselement (310) befestigt ist;
ein Entriegelungshalteelement (340), das auf der Führungsplatte für gemähtes Gras (200) bereitgestellt ist, das das Verriegelungselement (310) hält, so dass ein Entriegelungszustand des Verriegelungselements (310) durchgeführt wird; und
ein Entriegelungsfreigabeelement (350), das auf dem Mäherdeck (110) bereitgestellt ist, das den Entriegelungszustand freigibt und einen Verriegelungszustand durchführt, wenn die Führungsplatte für gemähtes Gras (200) in einer Position, die gemähtes Gras, das vom Entladeanschluss für gemähtes Gras (111) entladen wird, nicht führt, gedreht wird, so dass eine Position, die gemähtes Gras, das vom Entladeanschluss für gemähtes Gras (111) entladen wird, durchgeführt wird, wobei
das Entriegelungshalteelement (340), ein Entladestifterfassungselement ist, das, in im Gegensatz zur Aktivierung durch die Verriegelungsfeder, den Entriegelungsstift erfasst, so dass der Entriegelungszustand durchgeführt wird, und
wenn die Führungsplatte für gemähtes Gras (200), die den Entladeanschluss für gemähtes Gras (111) nicht abdeckt, gedreht wird, um den Entladeanschluss für gemähtes Gras (111) abzudecken, das Entriegelungsfreigabeelement (350) gegen den Entriegelungsstift stößt, den das Entriegelungshalteelement (340) erfasst, so dass der Entriegelungszustand freigegeben wird.

2. Aufsitzrasenmäher nach Anspruch 1, wobei
das Verriegelungselement (310) ein Verriegelungsstift ist, der auf einer Seite der Führungsplatte für gemähtes Gras (200) bereitgestellt ist, und veranlasst wird, auf eine Seite des Mäherdecks (110) vorzustehen, und
eine Verriegelungsstiftaufnahmeplatte (610), in der ein Verriegelungsstiftaufnahmeloch (611), in das ein hinterer Teil des Verriegelungselemente (310) eingeführt ist, gebildet ist, stehend auf einem oberen Plattenelement (112) des Mäherdecks (110) auf dem Mäherdeck bereitgestellt ist.

3. Aufsitzrasenmäher nach Anspruch 1 oder 2, wobei
der Entriegelungsstift in ein Eindringungsloch eingeführt ist, das im Verriegelungselement (310) gebildet ist, um vom Verriegelungselement (310) vorzustehen,
das Entriegelungsfreigabeelement (350) eine Platte ist, und
eine obere Seite des Entriegelungsfreigabeelements (350) in einer Ansicht von oben angeordnet ist, um parallel zu einer Stift-Achse-Richtung des Entriegelungselements (310) zu sein.

4. Aufsitzrasenmäher nach Anspruch 3, wobei
wenn die Führungsplatte für gemähtes Gras (200) den Entladeanschluss für gemähtes Gras (111) abdeckt, die obere Seite des Entriegelungsfreigabeelements (350) derart vorspringt, dass das Entriegelungshalteelement (340) den Entriegelungsstift nicht ohne eine Drehung des Verriegelungselements (310) erfassen kann.

## Revendications

1. Tondeuse autoportée comprenant: un châssis de tondeuse (110) ; une plaque de guidage d'herbe tondue (200) prévue en rotation au niveau d'un orifice de décharge d'herbe tondue (111), qui guide l'herbe tondue déchargée par l'orifice de décharge d'herbe tondue (111) ; et un élément de verrouillage (310) qui verrouille la plaque de guidage d'herbe tondue (200) dans une posture qui guide l'herbe tondue déchargée à partir de l'orifice de décharge d'herbe tondue (111),
**caractérisée en ce que** :
la tondeuse autoportée comprend :
un ressort de verrouillage qui excite l'élément de verrouillage (310) de sorte que l'état de verrouillage est réalisé ;
une broche de déverrouillage fixée sur l'élément de verrouillage (310) ;
un élément de support de déverrouillage (340) prévu sur la plaque de guidage d'herbe tondue (200), qui maintient l'élément de verrouillage (310) de sorte qu'un état de déverrouillage de l'élément de verrouillage (310) est réalisé ; et
un élément de libération de déverrouillage (350) prévu sur le châssis de tondeuse (110), qui libère l'état de déverrouillage et réalise un état de verrouillage, lorsque la plaque de guidage d'herbe tondue (200), dans une posture qui ne guide pas l'herbe tondue déchargée par l'orifice de décharge d'herbe tondue (111), tourne de sorte qu'une posture qui guide l'herbe tondue déchargée par l'orifice de décharge d'herbe tondue (111) est réalisée, dans laquelle :
l'élément de support de déverrouillage (340) est un élément d'accrochage de broche de déverrouillage qui accroche, en opposition à l'excitation par le ressort de verrouillage, la broche de déverrouillage de sorte que l'état de déverrouillage est réalisé, et
lorsque la plaque de guidage d'herbe tondue (200) qui ne couvre pas l'orifice de décharge d'herbe tondue (111), est entraînée en rotation afin de couvrir l'orifice de décharge d'herbe tondue (111), l'élément de libération de déverrouillage (350) vient en butée contre la broche de déverrouillage à laquelle l'élément de support de déverrouillage (340) s'accroche, de sorte que l'état de déverrouillage est libéré.

2. Tondeuse autoportée selon la revendication 1, dans laquelle :
l'élément de verrouillage (310) est une broche de verrouillage qui est prévue d'un côté de la plaque de guidage d'herbe tondue (200) et est faite pour faire saillie sur un côté du châssis de tondeuse (110), et
une plaque de réception de broche de verrouillage (610) où un trou de réception de broche de verrouillage (611) dans lequel une partie de queue de l'élément de verrouillage (310) est insérée, est formé, est prévue droite sur l'élément de plaque supérieure de châssis de tondeuse (112) du châssis de tondeuse (110).

3. Tondeuse autoportée selon la revendication 1 ou 2, dans laquelle :
la broche de déverrouillage est insérée dans un trou de pénétration formé dans l'élément de verrouillage (310) afin de faire saillie de l'élément de verrouillage (310),
l'élément de libération de déverrouillage (350) est une plaque, et
une face supérieure de l'élément de libération de déverrouillage (350) est, sur une vue de dessus, agencée afin d'être parallèle avec une direction d'axe de broche de l'élément de verrouillage (310).

4. Tondeuse autoportée selon la revendication 3, dans laquelle :
lorsque la plaque de guidage d'herbe tondue (200) recouvre l'orifice de décharge d'herbe tondue (111), la face supérieure de l'élément de libération de déverrouillage (350) fait saillie de sorte que l'élément de support de déverrouillage (340) ne peut pas accrocher la broche de déverrouillage sans une rotation de l'élément de verrouillage (310).
